# EUROPÄISCHE PATENTANMELDUNG

(11) **EP 1 783 440 A2**
(43) Veröffentlichungstag der Anmeldung: **09.05.2007**
(21) Anmeldenummer: 06023047.1
(22) Anmeldetag: 06.11.2006
(51) Int. Cl.: F24J 2/52, H01L 31/042

(54) **Tragkonstruktionsvorrichtung für Solaranlagen auf Flachdächern**

(30) Priorität: 05.11.2005 DE 102005053009; 01.05.2006 DE 102006020547
(71) Anmelder: FutureFasteningSystems Solarträgertechnik GmbH & Co. KG, 74740 Adelsheim (DE)
(72) Erfinder:
(74) Vertreter: Clemens, Gerhard

(57) **Zusammenfassung**

Eine Tragkonstruktionsvorrichtung zur Erstellung von Solaranlagen, insbesondere Voltaikanlagen, auf Flachdächern mit Tragmoduleinheiten (12.1), die jeweils folgende vormontierte Bauteile aufweisen, die im Wesentlichen in einer Tragebene angeordnet sind: eine erste Tragprofileinheit (14), die auf dem Flachdach direkt oder indirekt lagerbar oder anschließbar ist, eine geneigte Tragprofileinheit (16.1), die in ihrem einen Endbereich über eine erste Stützprofileinheit (18.1) an die erste Tragprofileinheit (14) angeschlossen ist, die an ihrem anderen Endbereich direkt oder über eine zweite Stützprofileinheit an die erste Tragprofileinheit (14) angeschlossen ist und an die Solarmodulträgerprofileinheiten anschließbar sind, an die die jeweiligen Solarmodule der Solaranlage anschließbar sind.

## Beschreibung

### TECHNISCHES GEBIET

Die vorliegende Erfindung betrifft eine Tragkonstruktionsvorrichtung zur Erstellung von Solaranlagen, insbesondere Voltaikanlagen, auf Flachdächern.

### STAND DER TECHNIK

Zur Erzielung einer ausreichenden Leistung ist es bei der Installation von Solaranlagen erforderlich, dass eine Vielzahl von Solarmodulen zu installieren ist, die eine relativ große Fläche benötigt, da die Solarmodule so aufgestellt werden müssen, dass möglichst wenig Beschattung gegeben ist, um die Energieausbeute zu optimieren. Die Tragkonstruktion für derartige in der Regel geneigt abzustellende Solarmodule wird gemäß dem Stand der Technik direkt vor Ort unter Verwendung einer Vielzahl von einzelnen Bauteilen montiert. Bedingt durch die Vielzahl der handzuhabenden Bauteile hat dies einen sehr hohen Montageaufwand zur Folge.

### DARSTELLUNG DER ERFINDUNG

Ausgehend von dem genannten Stand der Technik liegt der vorliegenden Erfindung die Aufgabe beziehungsweise das technische Problem zugrunde, eine Tragkonstruktionsvorrichtung zur Erstellung von Solaranlagen, insbesondere Voltaikanlagen, auf Flachdächern anzugeben, die wirtschaftlich hergestellt werden kann, in besonders einfacher Art und Weise und schnell vor Ort montiert werden kann, einen einfachen Anschluss der Solarmoduleinheiten mit jeweils variabler Neigung gewährleistet, eine dauerhaft zuverlässige Tragfunktion garantiert und hinsichtlich ihrer Handhabung auf der Baustelle besonders einfach ausgestaltet ist. Darüber hinaus liegt der Erfindung die Aufgabe zugrunde, auch eine Lösung bei Flachdächern anzubieten, die nur eine geringe zulässige Belastbarkeit aufweisen.

Die erfindungsgeznäße Tragkonstruktion ist durch die Merkmale des unabhängigen Anspruch 1 gegeben. Vorteilhafte Ausgestaltungen und Weiterbildungen sind Gegenstand der vor dem unabhängigen Anspruch 1 direkt oder indirekt abhängigen Ansprüche.

Die erfindungsgemäße Tragkonstruktion ist demgemäß gekennzeichnet durch das Vorsehen von einzelnen Tragmoduleinheiten, die jeweils folgende vormontierte Bauelemente aufweisen, die im Wesentlichen einer Tragebene angeordnet sind: eine erste Tragprofileinheit, die auf dem Flachdach direkt oder indirekt lagerbar oder anschließbar ist, eine geneigte Tragprofileinheit, die in ihrem einen Endbereich über eine erste Stützprofileinheit an die erste Tragprofileinheit angeschlossen ist, die an ihrem anderen Endbereich direkt oder über eine zweite Stützprofileinheit an die erste Tragprofileinheit angeschlossen ist und an die Solarmodulträgerprofileinheiten anschließbar sind, an die die jeweiligen Solarmodule der Solaranlage anschließbar sind.

Dadurch, dass die einzelnen Bauelemente bereits vormontiert auf die jeweilige Baustelle beziehungsweise Einbausituation geliefert werden, lässt sich der Montageaufwand drastisch reduzieren. Dies wirkt sich günstig auf die Montagekosten aus.

Durch das Vorsehen von lediglich drei Bauelementen pro Tragmoduleinheit ist darüber hinaus eine wirtschaftliche Vorfertigung in Großserienproduktion möglich.

Eine besonders vorteilhafte Ausgestaltung zeichnet sich dadurch aus, dass die erste und/oder zweite Stützprofileinheit höhenverstellbar ausgebildet ist/sind.

Eine besonders vorteilhafte Weiterbildung, die eine problemlose Montage unter Berücksichtigung unterschiedlicher Neigungen der Solarmodule ermöglicht, zeichnet sich dadurch aus, dass der Anschluss der geneigten Tragprofileinheit an die erste Stützprofileinheit und/oder an die zweite Stützprofileinheit und/oder an die erste Tragprofileinheit durch eine im Wesentlichen senkrecht zur Tragebene angeordnete erste beziehungsweise zweite beziehungsweise dritte Gelenkachse gebildet wird.

Eine konstruktiv besonders einfache umzusetzende Lösung zeichnet sich dadurch aus, dass die erste, zweite, dritte Gelenkachse als Bolzen- oder Schraubeneinheit ausgebildet ist

Eine vorteilhafte Ausgestaltung der ersten Tragprofileinheit, die einfache Anschlussmöglichkeiten und damit eine einfache und kostengünstige Vormontage ermöglicht, zeichnet sich dadurch aus, dass die erste Tragprofileinheit eine durchgehende, nach oben offene, insbesondere hinterschnittene, erste Ausnehmung aufweist.

Um zu einer möglichst leichten Konstruktion zu gelangen, ist die erste beziehungsweise zweite Stützprofileinheit als Hohlprofileinheit, insbesondere Rohr-, Quadrat- oder Rechteckprofileinheit ausgebildet.

Bevorzugt sind sowohl die Stützprofileinheiten als auch die Tragprofileinheiten als stranggepresste Aluminiumprofileinheiten ausgebildet, was ebenfalls einer leichten und damit bei der Montage einfach zu handhabenden Konstruktion entgegenkommt.

Eine hinsichtlich der Anschlussmöglichkeiten besonders bevorzugte Ausgestaltung zeichnet sich dadurch aus, dass die geneigte Tragprofileinheit eine durchgehende, nach unten offene, insbesondere hinterschnittene, zweite Ausnehmung und/oder eine durchgehende, nach oben offene, insbesondere hinterschnittene, dritte Ausnehmung aufweist.

Die konstruktive Ausgestaltung wird gemäß einer bevorzugten Alternative der erfindungsgemäßen Tragkönstruktionsvorrichtung dadurch umgesetzt, dass die dritte Ausnehmung der geneigten Tragflächenprofileinheit durch zwei, parallel beabstandet angeordnete, nach unten weisende Stege gebildet wird, deren lichter Außenabstand kleiner ist als der lichte Innenabstand der ersten Ausnehmung der ersten Tragprofileinheit und/oder das lichte Innenmaß der ersten Stützprofileinheit im Anschlussbereich an die erste Tragprofileinheit kleiner ist als der lichte Innenabstand der ersten Ausnehmung der ersten Tragprofileinheit und/oder der lichte Innenabstand der dritten Ausnehmung der geneigten Tragprofileinheit größer ist als das lichte Außenmaß der ersten Stützprofileinheit im Anschlussbereich an die geneigte Tragprofileinheit.

Durch die geometrische Ausbildung der Ausnehmung in der oben genannten Art stehen äußerst einfache Anschlussmöglichkeiten zur Verfügung, die einerseits eine wirtschaftliche Vormontage der Tragkonstruktionsvorrichtung erlauben und andererseits eine dauerhaft zuverlässige Tragfunktion gewährleisten.

Eine besonders bevorzugte Ausgestaltung, die einen hohen Grad an Vorfertigung, eine einfache und schnelle Montage, insbesondere bezüglich großer zu bedeckender Montageflächen, ermöglicht, ist gekennzeichnet durch wenigstens eine vormontierte Tragmoduleinrichtung, die zwei parallel zueinander angeordnete Tragmoduleinheiten aufweist, deren erste Tragprofileinheiten durch zwei parallel beabstandet zueinander angeordneten zweiten Tragprofileinheiten miteinander gelenkig verbunden sind, derart, dass die erste und zweite Tragprofileinheiten in einer Draufsicht gesehen ein klappbares Parallelogramm beziehungsweise klappbare Raute bilden.

Durch die Ausbildung von zusammenklappbaren Tragmoduleinrichtungen, die zumindest aus zwei Tragmoduleinheiten bestehen, kann eine in Großserienproduktion vorteilhafte Konstruktion umgesetzt werden, die zusammengeklappt und somit wenig Transportvolumen beanspruchend, auf die Baustelle angeliefert werden und dort in einfacher Art und Weise durch Aufklappen in ihrer endgültigen Position montiert werden.

Dabei zeichnet sich eine besonders vorteilhafte Ausgestaltung dadurch aus, dass der jeweilige gelenkige Anschluss zwischen der ersten Tragprofileinheit und der zweiten Tragprofileinheit lösbar fixierbar ausgebildet ist.

Eine konstruktiv besonders einfache und auf der Baustelle während der Montage schnelle und problemlos zu handhabende Ausgestaltung zeichnet sich dadurch aus, dass die erste und/oder zweite Stützprofileinheit im lösbar fixierbaren gelenkigen Anschlussbereich an die erste Tragprofileinheit eine erste Gewindestange mit einer Gewindehülse aufweist, wobei durch Drehen der Gewindehülse die gelenkige Verbindung zwischen der ersten oder zweiten Stützprofileinheit mit der ersten Tragprofileinheit beziehungsweise die gelenkige Verbindung zwischen erster oder zweiter Stützprofileinheit und der ersten Tragprofileinheit mit der zweiten Tragprofileinheit fixierbar beziehungsweise lösbar ist.

Diese vorteilhafte Lösungsvariante wird gemäß einer bevorzugten Ausgestaltung vorteilhaft dadurch ergänzt, dass die erste und/oder zweite Stützprofileinheit im Anschlussbereich an die geneigte Tragprofileinheit eine in der Gewindehülse kämmende zweite Gewindestange aufweist, wobei durch Drehen der Gewindehülse die erste oder zweite Stützprofileinheit höhenverstellbar ist.

Durch das Vorsehen der ersten beziehungsweise zweiten Gewindestange in Verbindung mit der Gewindehülse wird in konstruktiv einfacher Art und Weise ermöglicht, dass die Fixierung der Tragmoduleinrichtung auf der Baustelle in ihrem Endzustand durch einfaches Drehen der Gewindehülse erreicht wird, wobei gleichzeitig eine Höhenverstellung der Stützprofileinheit möglich ist, so dass unterschiedliche Neigungswinkel der auf die Tragkonstruktionsvorrichtung zu montierenden Solarmodule problemlos möglich sind.

Eine unabhängig von dem Ausführungsbeispiel der obigen Tragkonstruktionsvorrichtung zu sehende, vorteilhafte Weiterbildung, die insbesondere für den Einsatz auf Flachdächern geeignet ist, die nur geringe zusätzliche Auflasten tragen können, zeichnet sich dadurch aus, dass mehrere durchgehende, direkt auf dem Flachdach parallel beabstandet gelagerte Lastverteilungsprofileinheiten vorhanden sind, auf denen mehrere Tragmoduleinheiten oder Tragmoduleinrichtungen angeschlossen sind, wobei die Lastverteilungsprofileinheiten direkt mit dem Flachdach verbunden sind und gegenüber dem Flachdach flüssigkeitsdicht abgedichtet sind.

Eine bezüglich der Anordnung der Tragmoduleinheiten beziehungsweise Tragmoduleinrichtungen auf den Lastverteilungsprofileinheiten vorteilhafte Weiterbildung zeichnet sich dadurch aus, dass die erste Tragprofileinheit oder die zweite Tragprofileinheit der Tragmoduleinheiten beziehungsweise der Tragmoduleinrichtungen quer verlaufend zu den Lastverteilungsprofileinheiten auf diesen oder parallel direkt aufliegend auf den Lastverteilungsprofileinheiten angeschlossen sind.

Die Lastverteilungsprofileinheit kann gemäß einer besonders bevorzugten Weiterbildung eine trapezförmige Außenumfangskontur aufweisen, die von der Dachkonstruktion her gesehen ein nach oben sich verjüngenden Querschnitt aufweist.

Die Lastverteilungsprofileinheit kann bevorzugt aus Holz oder Aluminium bestehen.

Die erfindungsgemäße Tragkonstruktion stellt in einer besonders vorteilhaften Ausgestaltung eine zusammenklappbare Leichtbaukonstruktion zu Erstellung von Voltaikauflagen auf Flachdächern zur Verfügung. Die werkseitig vormontierte Tragkonstruktion, die als Untergrundkonstruktion für die Solarmodule in Verbindung mit den Solarmodulträgerprofileinheiten dient, ermöglicht es in kürzester Zeit eine Solaranlage auf Flachdächern aufzustellen. Die gesamte Tragkonstruktion wird bei der Montage nach dem Aufklappen auf dem Flachdach festgesetzt. Die werkseitig vormontierte und zusammengeklappte Tragkonstruktion wird auf dem Dach der Verpackung entnommen, aufrecht aufgestellt und in einfacher Art und Weise aufgeklappt und fixiert. Durch einfaches Drehen der Gewindehülse werden dann die einzelnen Gelenkpunkte zwischen erster Tragprofileinheit und zweiter Tragprofileinheit mit Hand oder mit einem Werkzeug festgezogen, wobei dadurch die gelenkige Verbindung insgesamt fixiert wird. Darüber hinaus ist über die Gewindehülse in Verbindung mit der zweiten Gewindestange eine Höhenverstellung der Stützprofileinheiten möglich, wodurch eine einfache Regelung der Gradeinstellung der Solarmodule umgesetzt wird.

In einer zweiten, vorteilhaften Ausgestaltung der erfindungsgemäßen Tragkonstruktionsvorrichung bei der Lastverteilungsprofileinheiten eingesetzt werden, ist es möglich, mit diesem System Fotovoltaikanlagen auf Leichtbauflachdächern zu erstellen, die eine zusätzliche Auflast von mehr als 10 kp/m² nicht zulassen. Bevorzugt werden dabei die Lastverteilungs profileinheiten mittels Bohrschrauben durch die Dachhaut und Wärmedämmung in die tragende Konstruktion/Trapezbleche befestigt. Dadurch werden hohe Auflasten gleichmäßig über die gesamte Dachfläche unterhalb der Solaranlage verteilt. Mit dieser Ausführungsvariante ist es problemlos möglich die einzelnen Tragmoduleinheiten beziehungsweise Trageinrichtungen so anzuordnen, dass die jeweiligen Modulreihen beschattungsfrei bleiben.

Die Lastverteilungsprofileinheiten werden mit der Dachhaut wasserdicht eingedichtet. Gleichzeitig werden die Tragprofileinheiten, die auf den Lastverteilungsprofileinheiten angeschlossen werden, aus der Wasserebene des Flachdaches hervorgehoben und beispielsweise unter Verwendung eines Universalklebers und einem Verbindungsmittel mit den Lastverteilungsprofileinheiten verbunden.

Weitere Ausführungsformen und Vorteile der Erfindung ergeben sich durch die in den Ansprüchen ferner aufgeführten Merkmale sowie durch die nachstehend angegebenen Ausführungsbeispiele. Die Merkmale der Ansprüche können in beliebiger Weise miteinander kombiniert werden, insoweit sie sich nicht offensichtlich gegenseitig ausschließen.

### KURZE BESCHREIBUNG DER ZEICHNUNG

Die Erfindung sowie vorteilhafte Ausführungsformen und Weiterbildungen derselben werden im Folgenden anhand der in der Zeichnung dargestellten Beispiele näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:
- Fig.1: schematische Seitenansicht einer Tragmoduleinheit für Solarmodule mit drei Frofileinheiten, bestehend aus einer geneigten Tragprofileinheit, einer Stützprofileinheit und einer ersten Tragprofileinheit, die eine dreieckförmige Konstruktion darstellen gemäß einem ersten Ausführungsbeispiel mit den angegebenen Detailpunkten I. bis IV.,
- Fig. 2: schematische Seitenansicht des Details I. gemäß Fig. 1,
- Fig. 3: schematischer Schnitt durch das Detail I. gemäß Fig.1,
- Fig. 4: schematische Seitenansicht der Details I., III. und IV. gemäß Fig. 1,
- Fig. 5: schematischer Schnitt der Details II, III. und IV. gemäß Fig.1,
- Fig. 6a: schematischer Schnitt durch eine geneigte Tragprofileinheit gemäß Fig.1,
- Fig. 6b: schematischer Schnitt durch eine Stützprofileinheit gemäß Fig.1,
- Fig. 6c: schematischer Schnitt durch eine erste Tragprofileinheit gemäß Fig.1,
- Fig. 6d: schematischer Schnitt durch eine Lastverteilungsprofileinheit,
- Fig. 7: schematische Perspektivdarstellung einer Tragmoduleinrichtung mit zwei Tragmoduleinheiten, die über zwei zweite Tragprohleinheiten lösbar fixierbar klappbar miteinander verbunden sind, im aufgeklappten Zustand,
- Fig. 8: schematische Perspektivdarstellung einer Tragmoduleinrichtung mit zwei Tragmoduleinheiten, die über zwei zweite Tragprofileinheiten lösbar fixierbar klappbar miteinander verbunden sind, im zusammengeklappten Zustand,
- Fig. 9: schematischer Querschnitt durch die Tragmoduleinrichtung gemäß Fig.7,
- Fig. 10: schematischer Längsschnitt durch eine Tragmoduleinheit der Tragmoduleinrichtung gemäß Fig. 7,

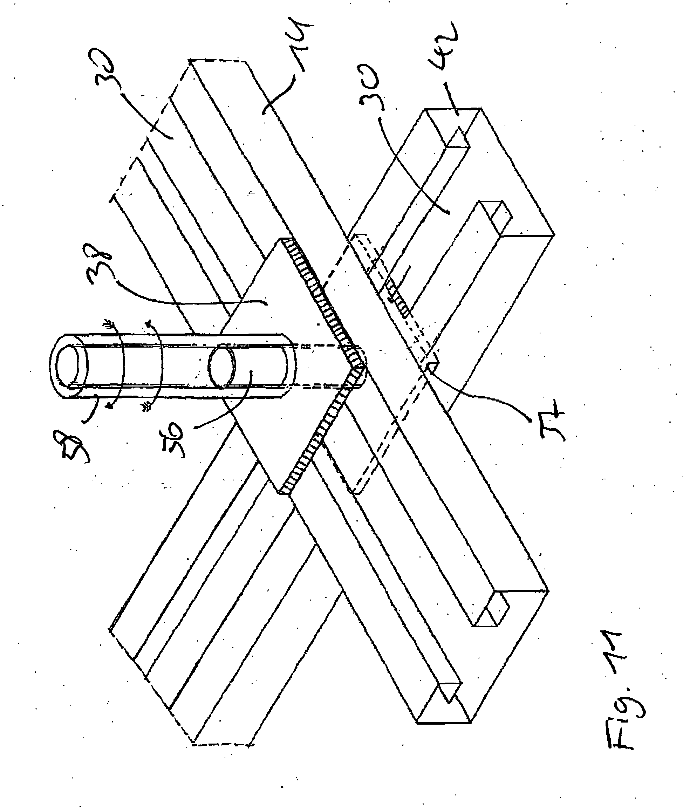

- Fig. 11: schematische Detailperspektive des Anschlussbereiches der ersten Stützprofileinheit an die erste und zweite Tragprofileinheit der Tragmoduleinheit der Trageinrichtung gemäß Fig. 7,
- Fig. 12: schematische Detailperspektivdarstellung einer Tragkonstruktionsvorrichtung auf einem Flachdach, bei der Tragmoduleinheiten parallel auf einer Lastverteilungseinheit gelagert sind,
- Fig.13: schematischer Schnitt durch die Tragmoduleinheit mit Lastverteiluingsprofileinheit gemäß Fig.12 im Bereich der Stützprofileinheit,
- Fig. 14: schematische Detailperspektivdarstellung einer Tragkonstruktionsvorrichtung mit Solaranlage mit Lastverteilungsprofileinheiten, wobei die Tragmoduleinheiten quer auf den Lastverteilungsproßleinheiten angeordnet sind,
- Fig. 15: Perspektivdarstellung der Anordnung von Tragmoduleinheiten parallel auf den Lastverteilungsprofileinheiten,
- Fig. 16a, b, c: Perspektivdarstellung der ersten Tragprofileinheit, der geneigten Tragprofileinheit und der höhenverstellbaren ersten Stützproßleinheit gemäß Fig.1,
- Fig. 17: Querschnitt durch eine weitere Variante einer Lastverteilungsprofileinheit und
- Fig. 18a, b, c: Schnitt, Draufsicht und Seitenansicht der Anordnung gemäß Fig. 15.

### WEGE ZUM AUSFÜHREN DER ERFINDUNG

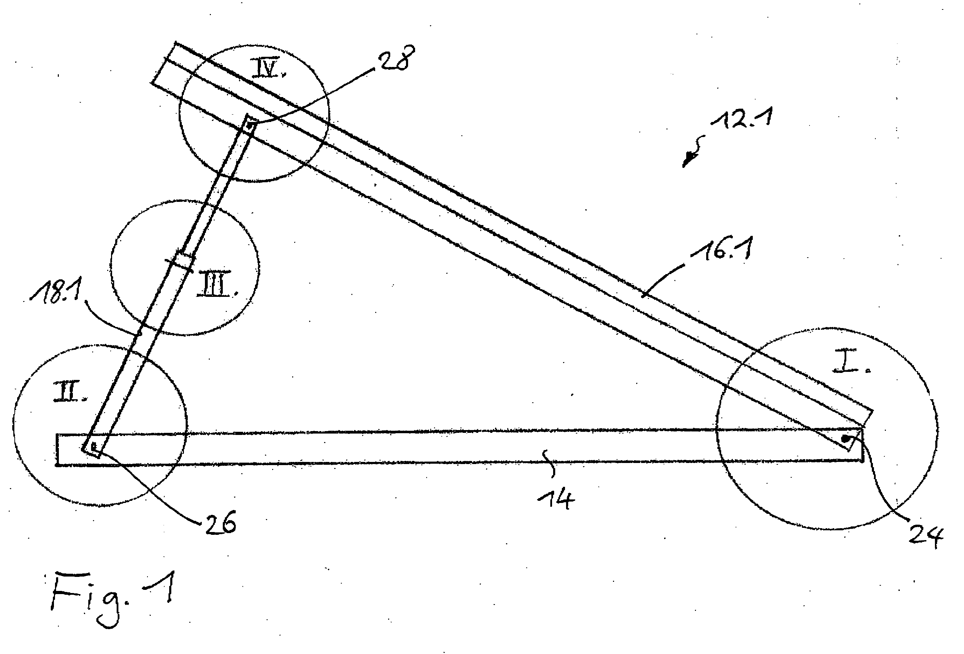

In Fig.1 ist in einer Seitenansicht ein erstes Ausführungsbeispiel einer Tragmoduleinheit 12.1 für eine Tragkonstruktionsvorrichtung zur Erstellung von Solaranlagen, insbesondere Voltaikanlagen, auf Flachdächern, dargestellt, das aus insgesamt drei Tragprofilen besteht, nämlich einer ersten Tragprofileinheit 14, die die Basis bildet und direkt oder indirekt auf der in Fig.1 nicht dargestellten Unterkonstruktion des Flachdaches angeschlossen beziehungsweise angeordnet ist, einer geneigt zur ersten Tragprofileinheit 14 vorhandenen geneigten Tragprofileinheit 16.1 und einer zwischen der ersten Tragprofileinheit 14 und der geneigten Tragprofileinheit 16.1 angeordneten ersten Stützprofileinheit 18.1. Die genannten Profile bilden eine Tragebene.

Die geneigte Tragprofileinheit 16.1 ist in ihrem in Fig.1 rechten Endbereich an den rechten Endbereich der ersten Tragprofileinheit 14 über eine erste Gelenkachse 24 angeschlossen, die senkrecht zur Tragebene angeordnet ist. An die erste Tragprofileinheit 14 ist in ihrem in Fig.1 linken Endbereich die erste Stützprofileinheit 18.1 über eine zweite Gelenkachse 26 angeschlossen, die ebenfalls senkrecht zur Tragebene vorhanden ist. An den gegenüberliegenden Endbereich der ersten Stützprofileinheit 18.1 ist diese über eine dritte Gelenkachse 28 an die geneigte Tragprofileinheit 16.1 angeschlossen, wobei auch die dritte Gelenkachse 28 senkrecht zur Tragebene angeordnet ist. Die erste Stützprofileinhezt 18.1 ist höhenverstellbar ausgebildet, so dass die Neigung der geneigten Trapezprofileinheit 16 relativ zur ersten Tragprofileinheit 14 eingestellt werden kann.

Auf der geneigten Tragprofileinheit 16 sind in Querrichtung verlaufend, in Fig.1 1 stark schematisiert dargestellte Solarmodulträgerprofileinheiten 22 angeschlossen, die die jeweiligen Solarmodule tragen.

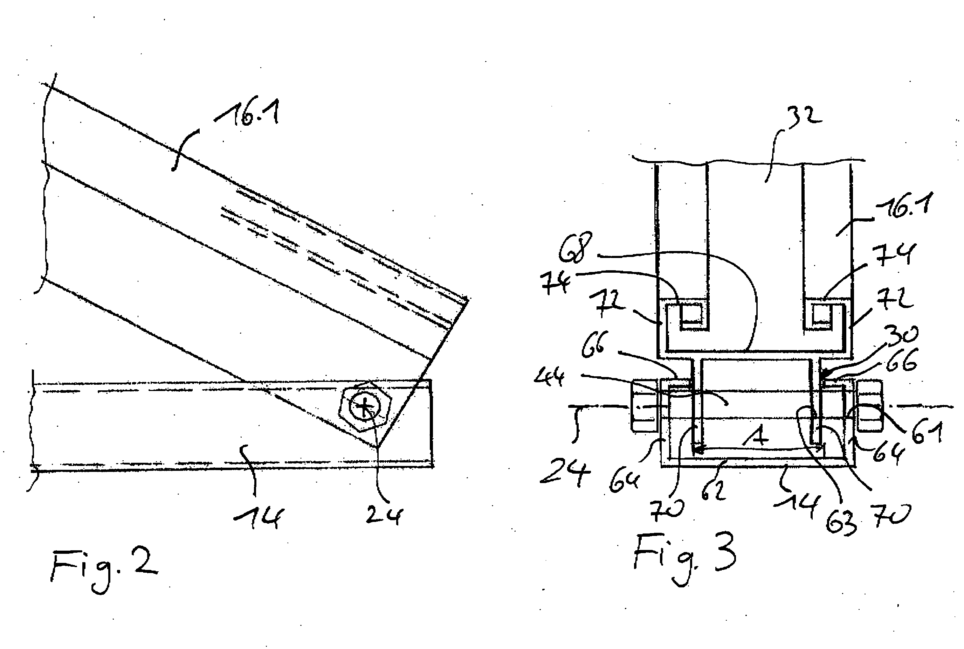

In den Figuren 2 und 3 ist der Detailpunkt I. gemäß Fig.1 näher dargestellt. Es handelt sich hierbei um den Anschluss der geneigten Tragprofileinheit 16.1 an die erste Tragprofileinheit 14. Die erste Tragprofileinheit 14 weist eine nach oben offene erste Ausnehmung 30 auf, die einen Hinterschnitt besitzt, der dadurch entsteht, dass die im Querschnitt U-förmige erste Tragprofileinheit 14 an einen unteren Flansch 62 angeschlossene, nach oben weisende Stege aufweist an deren oberen Endbereich wiederum nach innen weisende Flansche 66 angeschlossen sind.

Die geneigte Tragprofileinheit 16.1 weist einen Mittelflansch 68 auf, an den zwei nach unten weisende parallel beabstandete Stege 70 angeformt sind. Der lichte Außenabstand A der Stege 70 weist gegenüber dem lichten Innenabstand der nach innen weisenden Flansche 66 der ersten Tragprofileinheit 14 eine geringere Größe auf und daher können die Stege 70 der geneigten Tragprofileinheit 16.1 in die Ausnehmung 30 eingeführt werden. Durch entsprechende Bohrausnehmungen 61, 63 in den Stegen 64 der ersten Tragprofileinheit 14 und den Stegen 70 der geneigten Tragprofileinheit 16.1 wird ein einschraubbarer Bolzen 44 eingeführt, der die erste Gelenkachse 24 bildet. Die geneigte Tragprofileinheit 16.1 besitzt eine durchgehende Ausnehmung 32, die zum Anschluss der in den Figuren 2 und 3 nicht näher dargestellten Solarmodulträgerprofileinheit dient. Hierzu weist die geneigte Tragprofileinheit 16.1 nach oben weisende Stege 72 und an diese oberseitig angeformte, nach innen weisende Flansche 74 auf.

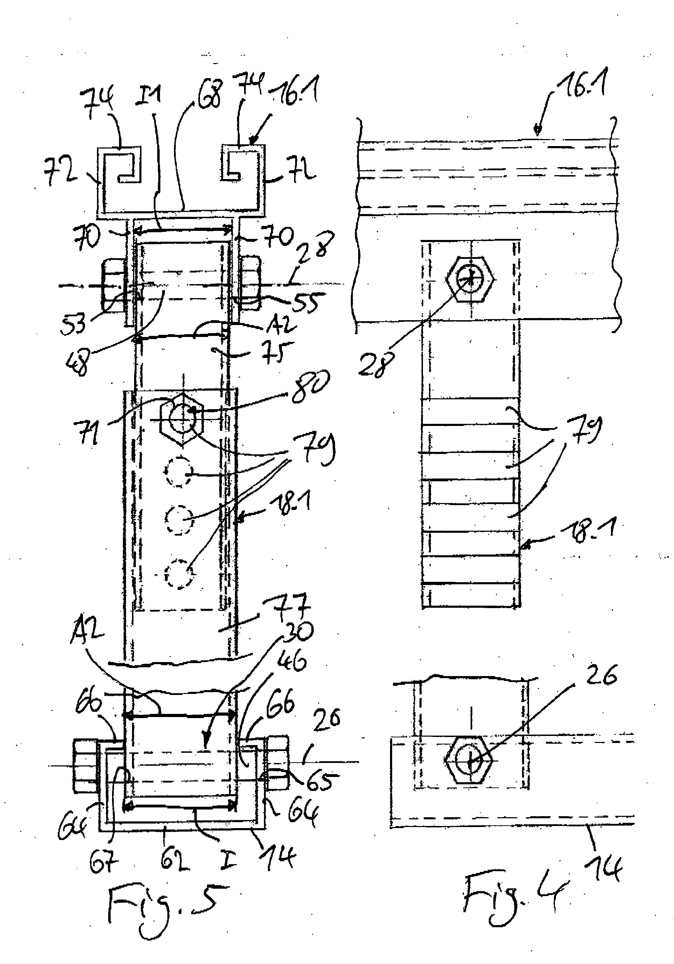

In den Figuren 4 und 5 ist das erste Stützprofil 18.1 mit seinen Anschlüssen an die geneigte Tragprofileinheit 16.1 (oberseitig) und an die erste Tragprofileinheit 14 (unterseitig) dargestellt. Auch hier wird die zweite Gelenkachse im Bereich des Anschlusses der ersten Stützprofileinheit 18.1 an die erste Tragprofileinheit 14 durch einen verschraubten Bolzen 46 umgesetzt, der den gelenkigen Anschluss gewährleistet. Der Bolzen 46 wird hierbei durch Bohrausnehmungen 65, 67 der ersten Tragprofileinheit 14 beziehungsweise der ersten Stützprofileinheit 18.1 geführt.

Oberseitig ist an der ersten Stützprofileinheit 18.1 ein verschraubter Bolzen 48 angeschlossen, der die gelenkige Verbindung mit den Stegen 70 der geneigten Tragprofileinheit 16.1 gewährleistet und der durch entsprechende Bohrausnehmungen 53, 55 an der ersten Stützprofileinheit 18.1 beziehungsweise der geneigten Tragprofileinheit 18.1 geführt ist.

Die erste Stützprofileinheit 18.1 ist hierbei höhenverstellbar ausgebildet, indem ein oberes Element 75, dessen lichte Außenmaße A2 kleiner sind als das lichte Innenmaß I1 der Stege 70 der geneigten Tragprofileinheit 16.1, vorhanden ist, das längsverschieblich in einem unteren Element 77 gelagert ist, dessen lichte Außenmaße A2 kleiner sind als die Innenmaße I der ersten Ausnehmung 30 der ersten Tragprofileinheit 14.

Die Höhenverstellung der ersten Stützprofileinheit 18.1 wird dadurch gewährleistet, dass an dem oberen Element 75 beziehungsweise unteren Element 77 in Längsrichtung rasterförmig vorhandene Ausnehmungen 79 vorhanden sind, durch die hindurch in der jeweiligen Koinsidenzposition eine Bolzen- oder Schraubverbindung 80 eingeführt werden kann.

Auch im in Fig.1 rechten Endbereich kann eine höhenverstellbare zweite Stützprofileinheit (in der Figur nicht dargestellt) angeschlossen sein, die beispielsweise eine ähnliche Struktur wie die erste Stützprofileinheit 18.1 haben kann.

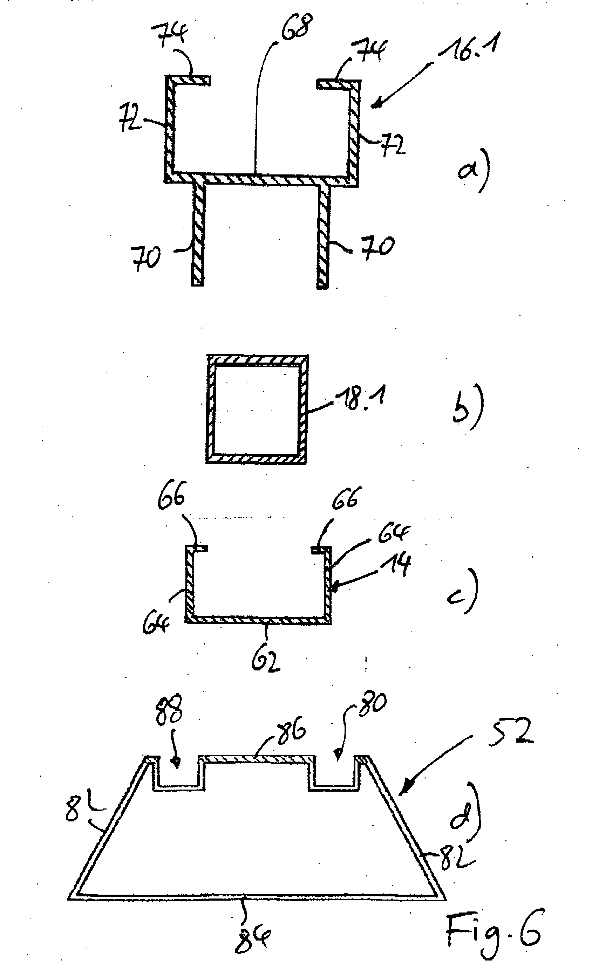

In den Figuren 6a, b und c ist die geneigte Tragprofileinheit 16.1, die erste Stützprofileinheit 18.1 und die erste Tragprofileinheit 14 im Querschnitt detailliert dargestellt.

Fig. 6d zeigt eine Lastverteilungspronleinheit 52, deren Einsatz weiter unten beschrieben werden wird. Die Lastverteilungsprofileinheit 52 weist einen trapezförmigen Querschnitt auf, wobei sich die Seitenflanken 82 von der Unterseite 84 her nach oben verjüngen und auf der Oberseite 86 zwei parallel beabstandete in Längsrichtung vorhandene Vertiefungen 88 vorhanden sind, die zur Aufnahme von Befestigungsmitteln dienen.

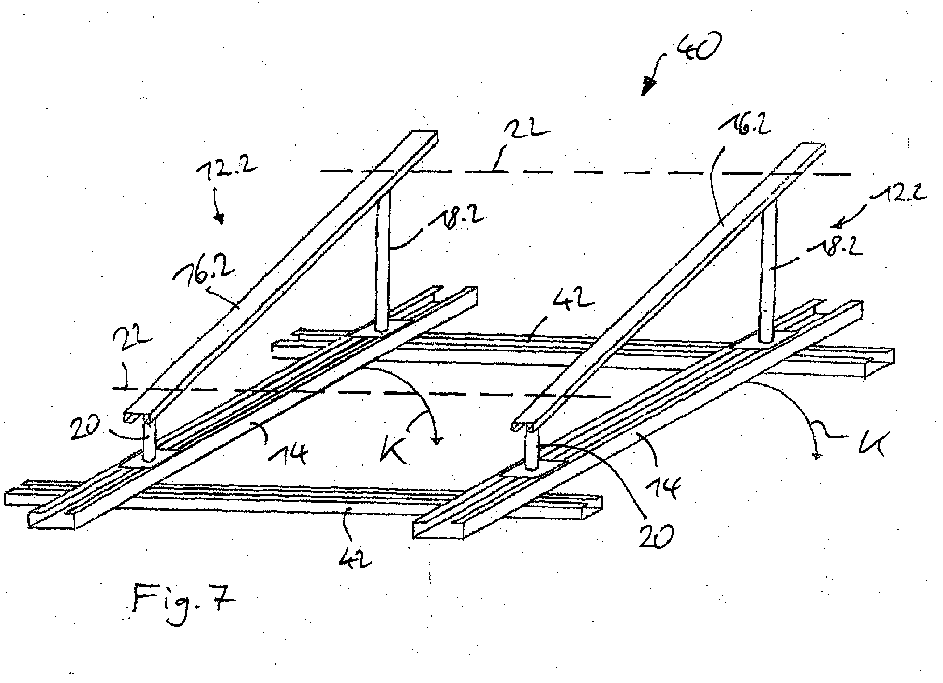

In Fig. 7 ist eine Tragmoduleinrichtung 40 perspektivisch dargestellt, die zwei parallel beabstandete Tragmoduleinheiten 12.2 aufweist, wobei die Tragmoduleinheiten 12.2 jeweils aus einer ersten unterseitig angeordneten Tragprofileinheit 14 bestehen, an deren jeweiligen Endbereich eine erste Stützprofileinheit 18.2 beziehungsweise zweite Stützprofileinheit 20 angeschlossen ist, wobei die erste Stützprofileinheit 18. 2 und die zweite Stützprofileinheit 20 wiederum oberseitig an eine geneigte Tragprofileinheit 16.2 angeschlossen ist. Die geneigten Tragprofileinheiten 16.2 dienen als Anschlussmöglichkeiten für in Fig. 7 gestrichelt dargestellte Solarmodulträgereinheiten 22, die quer zu den geneigten Tragprofileinheiten 16.2 verlaufen.

Unterseitig sind an die parallel beabstandeten ersten Tragprofileinheiten 14 zwei parallel beabstandete zweite Tragprofileinheiten 42 angeschlossen, die im dargestellten Ausführungsbeispiel dieselbe Querschnittskontur wie die ersten Tragprofileinheiten 14 aufweisen. Der jeweilige Anschluss der zweiten Tragprofileinheit 42 an die erste Tragprofileinheit 14 ist gelenkig ausgebildet und zwar in der Art, dass in einer Draufsicht gesehen, die/das durch die ersten Tragprofileinheiten 14 und die zweiten Tragprofileinheiten 42 gebildete/s Raute beziehungsweise Parallelogramm zusammenklappbar ist (Pfeil K in Fig. 7).

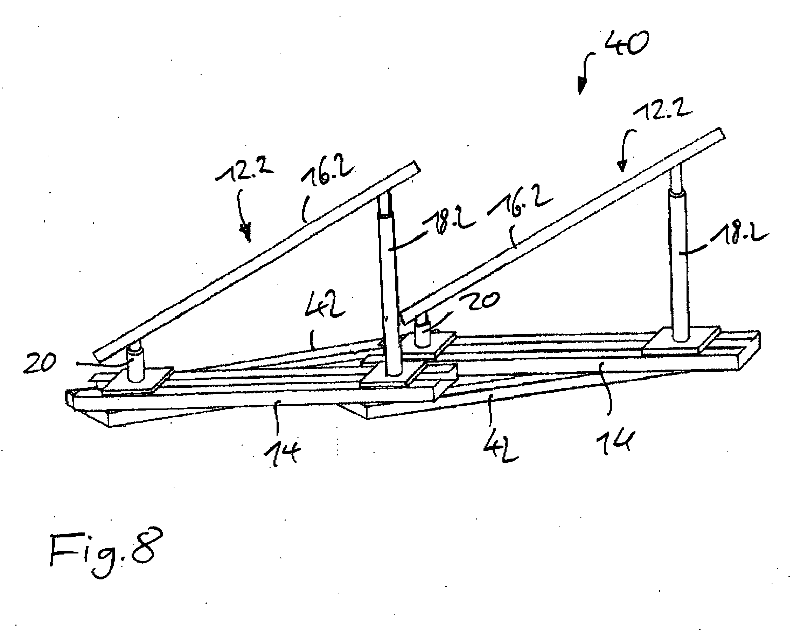

Der zusammengeklappte Zustand der Tragprofileinrichtung 40 ist in Fig. 8 in einer schematischen Perspektive dargestellt. Der Anschluss der geneigten Tragprofileinheiten 16.2 erfolgt jeweils in den Endbereichen über eine erste Stützprofileinheit 18.2 und eine zweite Stützprofileinheit 20, wobei beide Stützprofileinheiten in dem dargestellten Ausführungsbeispiel höhenverstellbar ausgebildet sind.

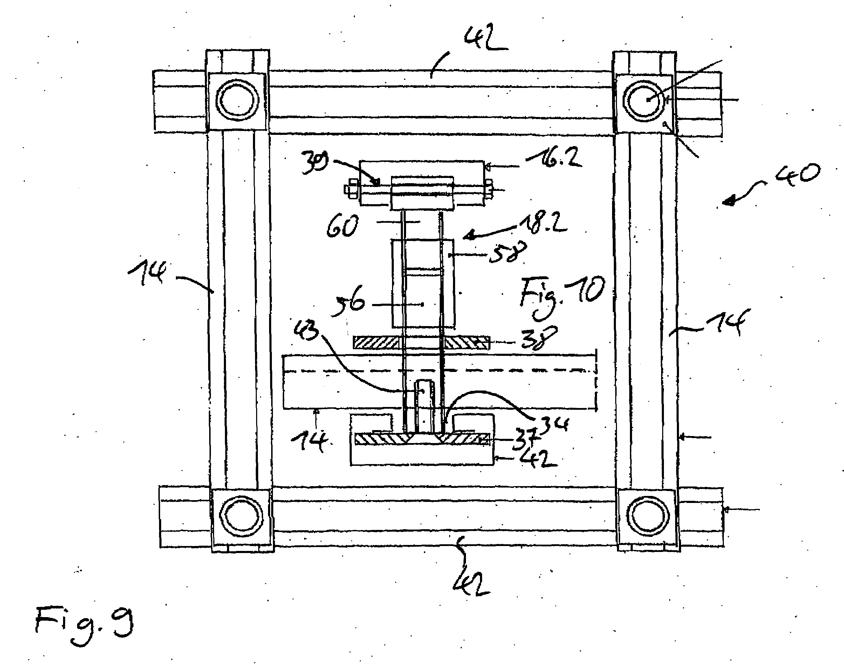

In Fig. 9 ist eine schematische Schnittdraufsicht auf die Tragmoduleitnichtung 40 gemäß Fig. 7 dargestellt.

Ein Schnitt im Bereich der ersten Stützprofileinheit 18.2 ist innerhalb der Fig. 9 als Fig. 10 dargestellt.

Die erste Stützprofileinheit 18.2 und auch die zweite Stützprofileinheit 20 weist im Gegensatz zu dem oben beschriebenen folgenden Aufbau auf. Die zweite Tragprofileinheit 42 besitzt ebenfalls eine nach oben offene, hinterschnittene Ausnehmung 34, innerhalb derer eine erste Klemmeinheit 37 angeordnet ist, die als Klemmplatte ausgebildet ist. Diese erste Klemmeinheit 37 ist über eine Verbindungseinheit 43 mit einer ersten Gewindestange 56 verbunden, die die erste Tragprofileinheit 14 durchstößt. Oberhalb der ersten Tragpronleinheit 14 ist eine zweite Klemmeinheit 38 angeordnet, die ebenfalls im Ausführungsbeispiel als Klemmplatte ausgebildet ist. Die erste Gewindestange 56 kämmt in einer Gewindehülse 58, wobei die geometrische Anordnung der Gewindehülse 58 in Bezug auf die erste Gewindestange 56 und in Verbindung mit der ersten und zweiten Klemmeinheit 37,38 so ausgestaltet ist, dass durch Drehen der Gewindehülse 58 die erste Klemmeinheit 37 mit der zweiten Klemmeinheit 38 verklemmt werden kann, so dass eine Fixierung der Position zwischen der Tragprofileinheit 14 und der zweiten Tragprofileinheit 42 in einfacher Art und Weise ermöglicht wird.

Des Weiteren weist die erste Stützprofileinheit 18.2 in ihrem oberen Endbereich eine zweite Gewindestange 60 auf, die ebenfalls in dem Gewinde der Gewindehülse 58 kämmt. Durch Drehung der Gewindehülse 58 kann eine Höhenverstellung oder eine Längenverstellung der ersten Stützprofileinheit 18.2 bewirkt werden. Die zweite Gewindestange 60 ist wiederum über eine Verbindereinrichtung 39 an die geneigte Tragprofileinheit 16.2 gelenkig angeschlossen. Durch die dargestellte Konstruktion ergeben sich keinerlei Zwängungspunkte bei der Höhenverstellung der ersten beziehungsweise auch der zweiten Stützprofileinheit 18.1 beziehungsweise 18.2, wobei gleichzeitig eine während der Montage einfach durchzuführende Fixierung der Relativlage zwischen der ersten Tragprofileinheit 14 und der zweiten Tragprofileinheit 42 als Tragmoduleinrichtung 40 während der Montage auf dem Flachdach problemlos möglich ist.

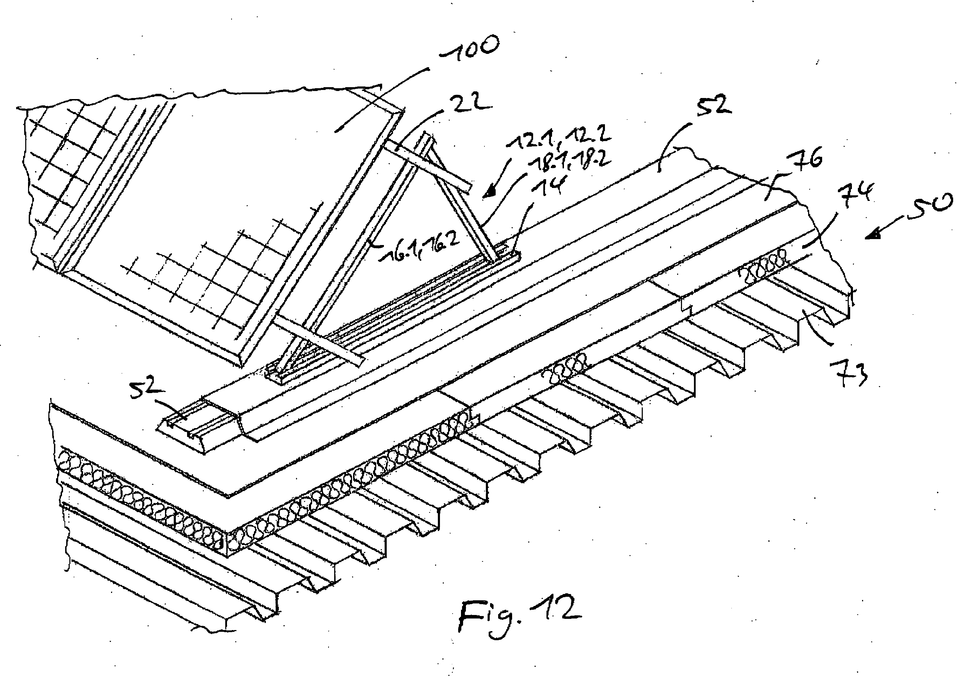

Fig. 12 zeigt schematisch einen Detailperspektivausschnitt aus einem Flachdach, bei dem Tragmoduleinheiten 12.1,12.2 auf einer Lastverteilungsprofileinheit 52 angeordnet sind, wobei die erste Tragprofileinheit 14 parallel zur Lastverteilungsprofileinheit 52 und auf dieser angeordnet ist. Die Lastverteilungsprofileinheit 52 dient hierbei dazu, die aufgrund der Montage der Solaranlage auftretende höhere Belastung auf dem Flachdach zu verteilen, so dass auch Flachdächer mit geringer zulässiger Auflast mit Solaranlagen nachgerüstet werden können. Das Flachdach 50 besitzt im dargestellten Ausführungsbeispiel einen Aufbau von unten nach oben wie folgt. Auf einem Trapezprofil 73 ist eine Wärmedämmung 74 aufgebracht. Auf der Wärmedämmung 74 ist eine Abdichtfolie 76 vorhanden. Auf dieser Abdichtfolie 76 ist wiederum die Lastverteilungsprofileinheit 52 angeordnet.

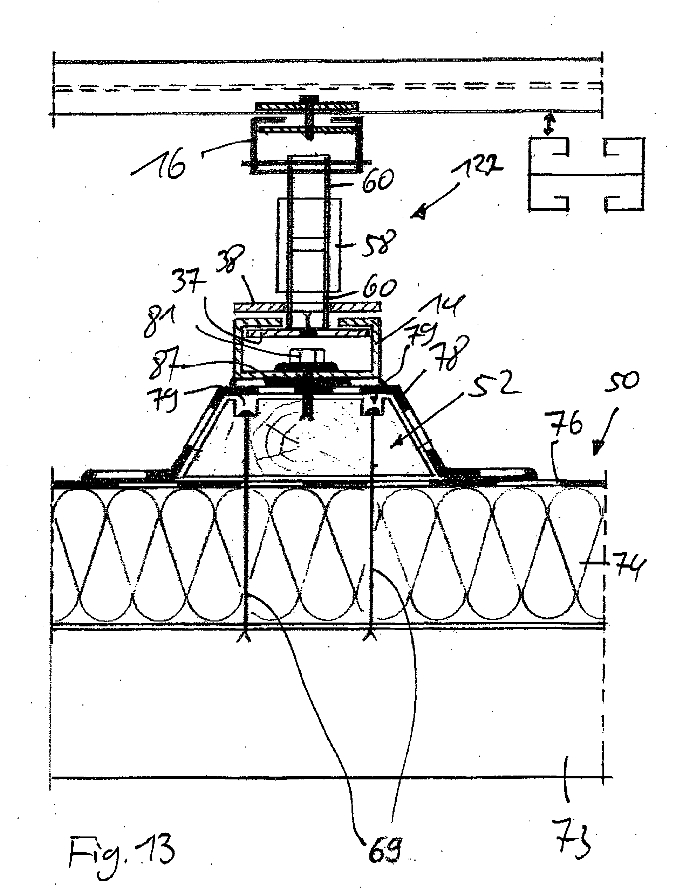

Der konstruktive Aufbau der Lastverteilungsprofileinheit 52 in Verbindung mit dem darunter befindlichen Flachdach und der auf der Lastverteilungsprofileinheit 52 angeordneten Tragmoduleinheit 12.1 ist in Fig.13 in einem Querschnitt schematisch dargestellt.

Die Lastverteilungsprofileinheit 52, wie bereits in Fig. 6d dargestellt besitzt eine trapezförmige Umfangskontur. Die Lastverteilungsprofileinheit 52 ist direkt auf der Abdichtfolie 76 des Flachdaches angeordnet und über zwei Verbindungselemente 69 mit diesem verbunden. Darüber hinaus ist die Lastverteilungsprofileinheit 52 oberseitig gegenüber der Abdichtfolie 76 des Flachdaches 50 mit einer zusätzlichen abdichtenden Oberfläche 78 umgeben.

Oberseitig ist auf der Lastverteilungsprofileinheit 52 auf der abdichtenden Oberfläche 78 die erste Tragprofileinheit 14 der Tragmoduleinheit 12.2 angeordnet und über eine zentrale Verbindungseinheit 81 mit der Lastverteilungsprofileinheit 52 verbunden, wobei diese Verbindungseinheit 81 durch eine zwischen der ersten Tragprofileinheit 14 und der Oberfläche 78 vorhandene flüssigkeitsdichte Kleberschicht 87 abgedichtet ist.

Durch das Vorsehen von Lastverteilungsprofileinheiten 52 wird einerseits die Punktbelastung des Flachdaches 50 reduziert und andererseits die Lagerung der Tragmoduleinheiten 12 beziehungsweise Tragmoduleinrichtungen 40 auf ein Niveau oberhalb der Wasserebene herausgehoben, was einer dauerhaft zuverlässigen Funktion hinsichtlich der Lagerung förderlich ist.

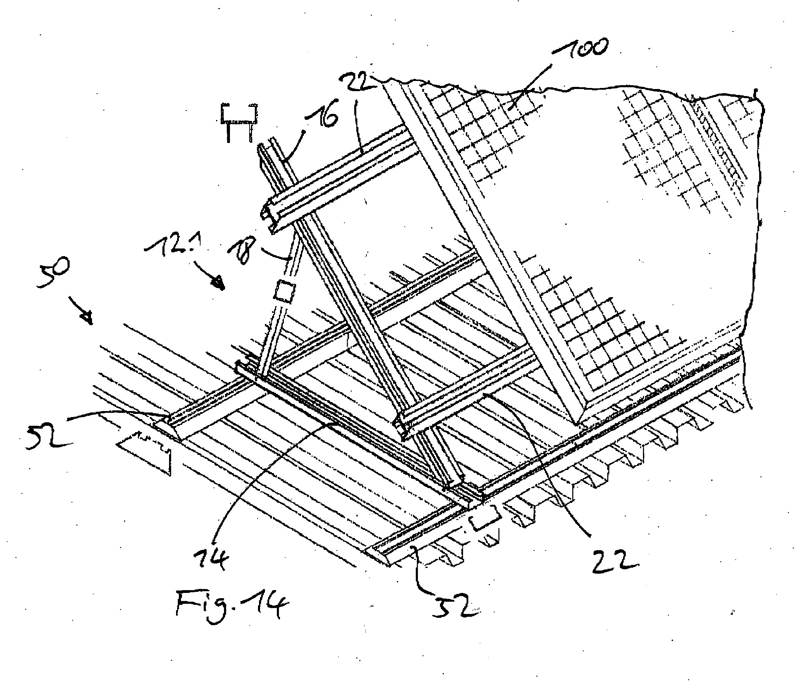

Fig.14 zeigt die Anordnung von Tragmoduleinheiten 12.1 quer zu auf dem Flachdach 50 angeschlossenen Lastverteilungsprofileinheiten 52, was innerhalb der erfindungsgemäßen Tragkonstruktionsvorrichtung problemlos umsetzbar ist.

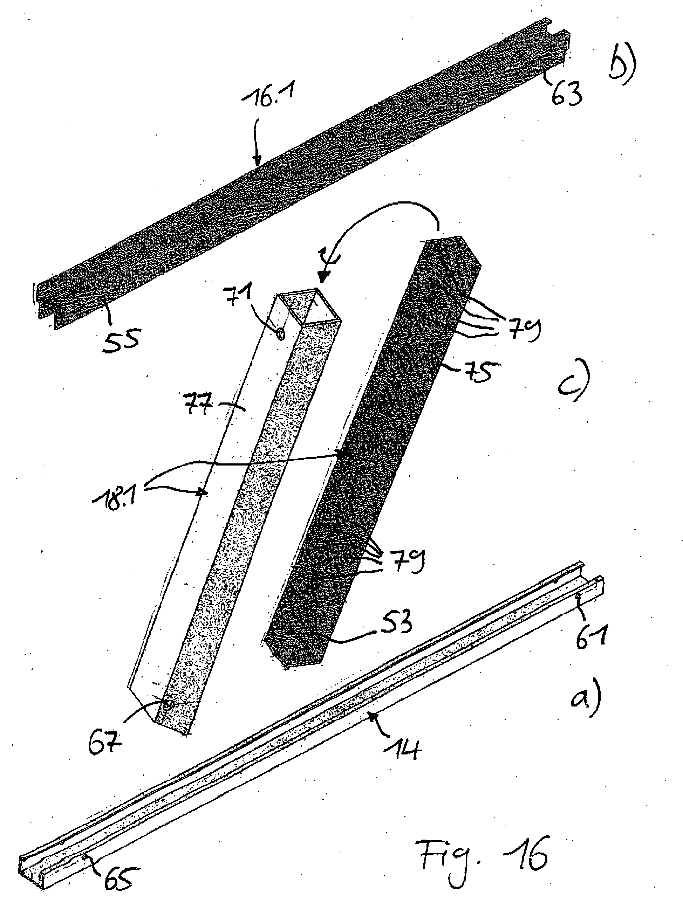

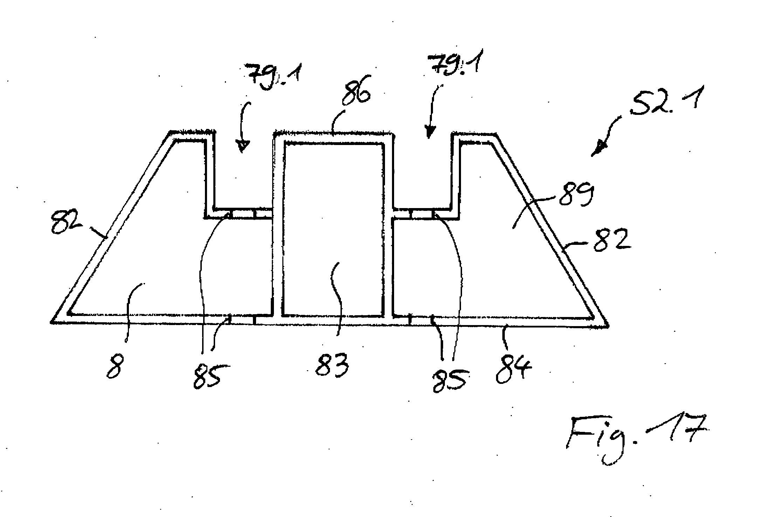

Fig. 15 zeigt in einer Perspektivdarstellung mehrere Tragmoduleinheiten 12, die jeweils parallel auf einer Lastverteilungsprofileinheit 52 hintereinander angeordnet sind, wobei auf den geneigten Tragprofileinheiten 16 jeweils zwei quer zu den Lastverteilungsprofileinheiten 52 und untereinander parallel beabstandete Solarmodulträgerprofileinheiten 22 angeschlossen sind. In den Figuren 18a, b und c ist diese Anordnung in einem Schnitt, in der Draufsicht und in einer Seitenansicht dargestellt.

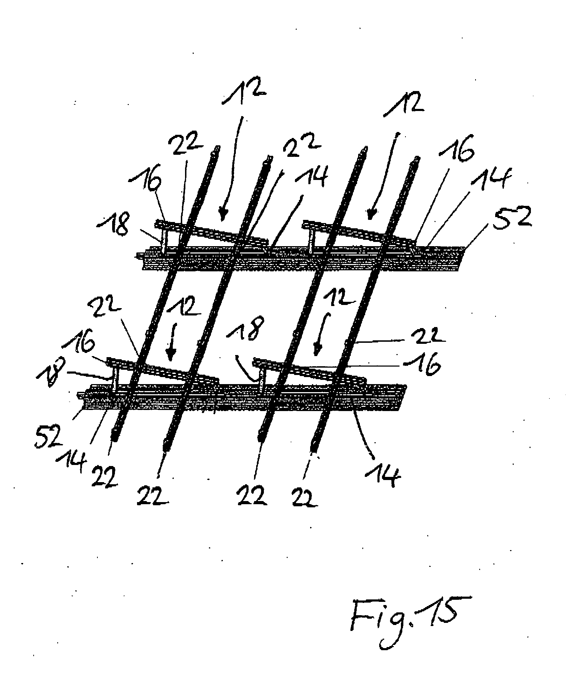

Fig. 16a zeigt die erste Tragprofileinheit 14 in einer Perspektive. Fig. 16b zeigt die geneigte Tragprofileinheit 16.1 in einer Perspektive. Die Fig. 16c zeigt die erste Stützprofileinheit 18.1 mit ihrem oberen Element 75 (rechts) und ihrem unteren Element 77 (links). Zum Einsetzen des oberen Elements 75 in das untere Element 77 wird dieses um 180° in der Plattebene und um 90° um seine Längsachse entgegen dem Uhrzeigersinn gedreht und in das Innere des unteren Elements 77 eingeführt, bis eine der Ausnehmungen 79 des oberen Elements 75 mit der Fixierausnehmung 71 des unteren Elements 77 zur Deckung kommt, je nachdem welche Länge die erste Stützprofileinheit 18.1 aufweisen soll, die durch die gewünschte Neigung der geneigten Tragprofileinheit 16.1 vorgegeben ist.

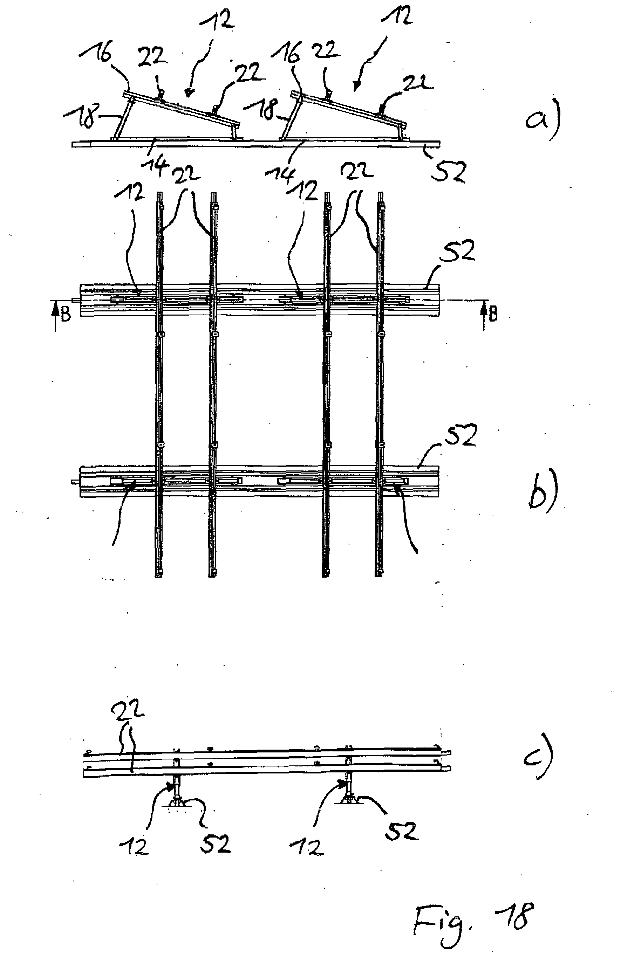

Fig. 17 zeigt schließlich im Querschnitt eine zweite Ausführungsvariante einer Lastverteilungsprofileinheit 52.1 die als Aluminiumstrangpressprofil ausgebildet ist.

Die Lastverteilungsprofileinheit 52.1 weist außenumfangsmäßig eine im Wesentlichen trapezförmige Kontur auf. An einer zentralen Rechteckkammer 83 sind seitlich jeweils Seitenkammern 89 angeformt, die diese Trapezkontur ergeben. Von der Oberseite 86 her sind jeweils rechts und links durchgehende, nutartige, nach oben offene Ausnehmungen 79.1 vorhanden, in die von oben her in Fig. 17 nicht näher dargestellte Befestigungsmittel durch entsprechende Ausnehmungen 85 eingeführt werden können, mittels derer die Lastverteilungsprofileinheit 52.1 mit der Unterkonstruktion verbunden werden kann. Eine derartige Profileinheit gewährleistet eine hohe Traglast bei geringer Durchbiegung.

Die erfindungsgemäße Tragkonstruktionsvorrichtung ermöglicht einerseits eine wirtschaftliche Herstellung im Werk, gewährleistet eine hohe Tragsicherheit und ist in Leichtbauweise ausgeführt, wobei die Montage vor Ort in einfacher und schneller Art und Weise zuverlässig durchgeführt werden kann, was insbesondere hinsichtlich der zu erstellenden großen Flächen für die Solaranlage wirtschaftlich besondere Vorteile mit sich bringt.

## Patentansprüche

1. Tragkonstruktionsvorrichtung zur Erstellung von Solaranlagen, insbesondere Voltaikanlagen, auf Flachdächern (50) mit Tragmoduleinheiten (12.1,12.2), die jeweils folgende vormontierte Bauteile aufweisen, die im Wesentlichen in einer Tragebene angeordnet sind:
- eine erste Tragprofileinheit (14), die auf dem Flachdach (50) direkt oder indirekt lagerbar oder anschließbar ist,
- eine geneigte Tragprofileinheit (16.1,16.2),
-- die in ihrem einen Endbereich über eine erste Stützprofileinheit (18.1, 18.2) an die erste Tragprofileinheit (14) angeschlossen ist,
-- die an ihrem anderen Endbereich direkt oder über eine zweite Stützprofileinheit (20.2) an die erste Tragprofileinheit (14) angeschlossen ist und
-- an die Solarmodulträgerprofileinheiten (22) anschließbar sind, an die die jeweiligen Solarmodule der Solaranlage anschließbar sind.

2. Tragkonstruktionsvorrichtung nach Anspruch 1,
- **dadurch gekennzeichnet, dass**
- die erste und/oder zweite Stützprofileinheit (18.1,18.2) höhenverstellbar ausgebildet ist/sind.

3. Tragkonstruktionsvorrichtung nach Anspruch 1 oder 2,
- **dadurch gekennzeichnet, dass**
- der Anschluss der geneigten Tragprofileinheit (16.1,16.2) an die erste Stützprofileinheit (18.1,18.2) und/oder an die zweite Stützprofileinheit (20) und/oder an die erste Tragprofileinheit (14) durch eine im Wesentlichen senkrecht zur Tragebene angeordnete erste beziehungsweise zweite beziehungsweise dritte Gelenkachse (24, 26, 28) gebildet wird.

4. Tragkonstruktionsvorrichtung nach Anspruch 3,
- **dadurch gekennzeichnet, dass**
- die erste, zweite, dritte Gelenkachse (24, 26, 28) als Bolzen- oder Schraubeneinheit ausgebildet ist.

5. Tragkonstruktionsvorrichtung nach einem oder mehreren der vorstehenden Ansprüche,
- **dadurch gekennzeichnet, dass**
- die erste Tragprofileinheit (14) eine durchgehende, nach oben offene, insbesondere hinterschnittene, erste Ausnehmung (30) aufweist.

6. Tragkonstruktionsvorrichtung nach einem oder mehreren der vorstehenden Ansprüche,
- **dadurch gekennzeichnet, dass**
- die erste und/oder zweite Stützprofileinheit (18.1, 18.2; 20) als Hohlprofileinheit, insbesondere als Rohr-, Quadrat- oder Rechteckprofileinheit, ausgebildet ist.

7. Tragkonstruktionsvorrichtung nach einem oder mehreren der vorstehenden Ansprüche,
- **dadurch gekennzeichnet, dass**
- die geneigte Tragproßleinheit (16.1, 16.2) eine durchgehende, nach unten offene, insbesondere hinterschnittene, zweite Ausnehmung (32) und/oder eine durchgehende, nach oben offene, insbesondere hinterschnittene, dritte Ausnehmung (34) aufweist.

8. Tragkonstruktionsvorrichtung nach Anspruch 5 oder 7,
- **dadurch gekennzeichnet, dass**
- die dritte Ausnehmung (34) der geneigten Tragflächenprofileinheit (16.1) durch zwei, parallel beabstandet angeordnete, nach unten weisende Stege (36) gebildet wird, deren lichter Außenabstand (A) kleiner ist als der lichte Innenabstand (I) der ersten Ausnehmung (30) der ersten Tragprofileinheit (14) und/oder das lichte Innenmaß (A1) der ersten Stützprofileinheit im Anschlussbereich an die erste Tragprofileinheit (14) kleiner ist als der lichte Innenabstand (I) der ersten Ausnehmung (30) der ersten Tragprofileinheit (14) und/oder der lichte Innenabstand (I1) der dritten Ausnehmung (34) der geneigten Tragprofileinheit (16.1) größer ist als das lichte Außenmaß (A2) der ersten Stützprofileinheit (18.1) im Anschlussbereich an die geneigte Tragprofileinheit (16.1).

9. Tragkonstruktionsvorrichtung nach einem oder mehreren der vorstehenden Ansprüche,
- **gekennzeichnet durch**
- wenigstens eine vormontierte Tragmoduleinrichtung (40), die zwei parallel zueinander angeordnete Tragmoduleinheiten (12.2) aufweist, deren erste Tragprofileinheiten (14) **durch** zwei parallel beabstandet zueinander angeordneten zweiten Tragprofileinheiten (42) miteinander gelenkig verbunden sind, derart, dass die erste und zweite Tragprofileinheiten (12.2, 42) in einer Draufsicht gesehen ein klappbares Parallelogramm beziehungsweise klappbare Raute bilden.

10. Tragkonstruktionsvorrichtung nach Anspruch 9,
- **dadurch gekennzeichnet, dass**
- der jeweilige gelenkige Anschluss zwischen der ersten Tragprofileinheit (14) und der zweiten Tragprofileinheit (42) lösbar fixierbar ausgebildet ist.

11. Tragkonstruktionsvorrichtung nach einem oder mehreren der vorstehenden Ansprüche,
- **dadurch gekennzeichnet, dass**
- die erste Tragprofileinheit (14) und/oder die geneigte Tragprofileinheit (16.1,16.2) und/oder die erste Stützprofileinheit (18.1,18.2) und/oder die zweite Stützprofileinheit (20) als Strangpressprofileinheit, insbesondere aus Aluminium, ausgebildet ist/sind.

12. Tragkonstruktionsvorrichtung nach einem oder mehreren der vorstehenden Ansprüche,
- **dadurch gekennzeichnet, dass**
- die erste und/oder zweite Stützprofileinheit (18.2; 20) im lösbar fixierbaren gelenkigen Anschlussbereich an die erste Tragprofileinheit (14) eine erste Gewindestange (56) mit einer Gewindehülse (58) aufweist, wobei durch Drehen der Gewindehülse (58) die gelenkige Verbindung zwischen der ersten oder zweiten Stützprofileinheit (18.2; 20) mit der ersten Tragprofileinheit (14) beziehungsweise die gelenkige Verbindung zwischen erster oder zweiter Stützprofileinheit (18.2; 20) und der ersten Tragprofileinheit (14) mit der zweiten Tragprofileinheit (42) fixierbar beziehungsweise lösbar ist.

13. Tragkonstruktionsvorrichtung nach Anspruch 12,
- **dadurch gekennzeichnet, dass**
- die erste und/oder zweite Stützprofileinheit (18.2; 20) im Anschlussbereich an die geneigte Tragprofileinheit (16) eine in der Gewindehülse (58) kämmende zweite Gewindestange (60) aufweist, wobei durch Drehen der Gewindehülse (58) die erste oder zweite Stützprofileinheit (18.2; 20) höhenverstellbar ist.

14. Tragkonsbuktionsvorrichtung nach einem oder mehreren der vorstehenden Ansprüche,
- **dadurch gekennzeichnet, dass**
- mehrere durchgehende, direkt auf dem Flachdach (50) parallel beabstandet gelagerte Lastverteilungsprofileinheiten (52) vorhanden sind, auf denen mehrere Tragmoduleinheiten (12.1,12.2) oder Tragmoduleinrichtungen (40) angeschlossen sind, wobei die Lastverteilungsprofileinheiten (52) direkt mit dem Flachdach (50) verbunden sind und gegenüber dem Flachdach (50) flüssigkeitsdicht abgedichtet sind.

15. Tragkonstruktionsvorrichtung nach Anspruch 14,
- **dadurch gekennzeichnet, dass**
- die erste Tragprofileinheit (14) oder die zweite Tragprofileinheit (42) der Tragmoduleinheiten (12.1, 12.2) beziehungsweise der Tragmoduleinrichtungen (40) quer verlaufend zu den Lastverteilungsprofileinheiten (52) auf diesen oder parallel direkt aufliegend auf den Lastverteilungsprofileinheiten (52) angeschlossen sind.

16. Tragkonstruktionsvorrichtung nach Anspruch 14 oder 15,
- **dadurch gekennzeichnet, dass**
- die Lastverteilungsprofileinheit (52) eine im Wesentlichen trapezförmige Außenumfangskontur mit nach oben sich verjüngendem Querschnitt aufweist.

17. Tragkonsbuktionsvorrichtung nach einem oder mehreren der Ansprüche 14 bis 16,
- **dadurch gekennzeichnet, dass**
- die Lastverteilungsprofileinheit (52) aus Holz oder Aluminium besteht
